# EUROPÄISCHE PATENTANMELDUNG

(11) **EP 2 955 459 A1**
(43) Veröffentlichungstag der Anmeldung: **16.12.2015**
(21) Anmeldenummer: 14398007.6
(22) Anmeldetag: 12.06.2014
(51) Int. Cl.: F24H 9/12, F24D 19/10, F24D 11/00, F16K 11/085

(54) **Einspeiseeinrichtung, Mehrwegeventil, System und Verfahren zum Betrieb solch eines Systems**

(71) Anmelder: Bosch Termotecnologia S.A., 3800-533 Aveiro (PT)
(72) Erfinder: Potra, Joao, 3830-292 Ilhavo (PT)
(74) Vertreter: Holzhüter, Matthias

(57) **Zusammenfassung**

Die Erfindung betrifft eine Einspeiseeinrichtung, ein Mehrwegeventil und ein System, wobei die Einspeiseeinrichtung einen ersten Anschluss, ein Anschlussstück und ein Einspeiserohr umfasst, wobei der erste Anschluss mit einem Mehrwegeventil verbindbar ist, wobei das Anschlussstück mit einem Wärmespeicheranschluss des Wärmespeichers verbindbar ist, wobei das Einspeiserohr mit dem ersten Anschluss verbunden ist, wobei ein zweiter Anschluss und eine Verbindungsleitung vorgesehen sind, wobei das Anschlussstück hohlzylindrisch ausgebildet ist und das Einspeiserohr durch das Anschlussstück geführt ist und mit dem zweiten Anschluss fluidisch verbunden ist, wobei der erste Anschluss mittels der Verbindungsleitung mit dem Anschlussstück fluidisch verbunden ist.

## Beschreibung

Die Erfindung betrifft eine Einspeiseeinrichtung gemäß Patentanspruch 1, ein Mehrwegeventil gemäß Patentanspruch 6 und ein System gemäß Patentanspruch 10 und 11 sowie ein Verfahren zum Betrieb solch eines Systems gemäß Patentanspruch 14.

### Stand der Technik

Aus der DE 10 2010 024 347 ist eine Heizungseinrichtung mit einem Fluidspeicher, mit einem Wärmetauscher, dessen Vorlaufleitung geodätisch tiefer liegend hydraulisch mit dem Fluidspeicher verbunden ist als dessen Rücklaufleitung, und mit einer Pumpe, die in der Vorlaufleitung oder der Rücklaufleitung angeordnet ist, bekannt.

Es ist Aufgabe der Erfindung, eine verbesserte Einspeiseeinrichtung, ein verbessertes Ventil und ein verbessertes System sowie ein verbessertes Verfahren zum Betrieb solch eines Systems bereitzustellen.

### Offenbarung der Erfindung

Diese Aufgabe wird mittels einer Einspeiseeinrichtung gemäß Patentanspruch 1 gelöst. Vorteilhafte Ausführungsformen sind in den abhängigen Ansprüchen angegeben.

Erfindungsgemäß wurde erkannt, dass eine verbesserte Einspeiseeinrichtung dadurch bereitgestellt werden kann, dass die Einspeiseeinrichtung zur

Einspeisung eines Wärmeträgermediums in einem Wärmespeicher einen ersten Anschluss, ein Anschlussstück und ein Einspeiserohr aufweist. Der erste Anschluss ist mit einem Mehrwegeventil verbindbar. Das Anschlussstück ist mit einem Wärmespeicheranschluss des Wärmespeichers verbindbar. Ferner sind ein zweiter Anschluss und eine Verbindungsleitung vorgesehen, wobei das Anschlussstück hohlzylindrisch ausgebildet ist und das Einspeiserohr durch das Anschlussstück geführt ist und mit dem zweiten Anschluss fluidisch verbunden ist. Der erste Anschluss ist mittels der Verbindungsleitung mit dem Anschlussstück fluidisch verbunden.

Dadurch kann gewährleistet werden, dass das erwärmte Wärmeträgermedium auf unterschiedlichen Höhen in den Wärmespeicher eingespeist werden kann.

In einer weiteren Ausführungsform mündet die Verbindungsleitung in dem Anschlussstück an einer ersten Einspeiseöffnung. Das Einspeiserohr ist mit einem festen Ende mit dem zweiten Anschluss verbunden, wobei an einem ersten freien Ende des Einspeiserohrs eine zweite Einspeiseöffnung angeordnet ist. Die erste Einspeiseöffnung ist zu der zweiten Einspeiseöffnung in Erstreckungsrichtung des Einspeiserohrs beabstandet angeordnet.

Zum erleichternden Anschluss der beiden Anschlüsse ist der ersten Anschluss quer zur Erstreckungsrichtung des Einspeiserohrs zu dem zweiten Anschluss versetzt angeordnet.

In einer weiteren Ausführungsform weist die Verbindungsleitung einen ersten Abschnitt und einen zweiten Abschnitt auf. Der erste Abschnitt ist an dem Anschlussstück angeordnet. Der erste Anschluss ist an dem zweiten Abschnitt angeordnet. Die beiden Abschnitte sind unterschiedlich zueinander, vorzugsweise senkrecht zueinander, ausgerichtet.

In einer weiteren Ausführungsform sind das Einspeiserohr und das Anschlussstück koaxial zueinander ausgerichtet.

Die Aufgabe wird aber auch durch ein Mehrwegeventil gemäß Patentanspruch 6 gelöst. Vorteilhafte Ausführungsformen sind in den abhängigen Ansprüchen angegeben.

Erfindungsgemäß wurde erkannt, dass ein verbessertes Mehrwegeventil zur Steuerung einer Einspeiseeinrichtung, wie oben beschrieben, dadurch bereitgestellt werden kann, dass das Mehrwegeventil ein Ventilgehäuse und einen im Ventilgehäuse angeordneten Ventilkörper umfasst. Das Ventilgehäuse umfasst wenigstens einen ersten Ventilanschluss, einen zweiten Ventilanschluss, einen dritten Ventilanschluss. Der Ventilkörper ist zwischen einer Offenposition, eine Schließposition und einer zweiten Offenposition verdrehbar um eine Drehachse gelagert und weist zumindest abschnittsweise eine hohlzylindrische Ausgestaltung auf. Der Ventilkörper weist eine an einer äußeren Umfangsfläche angeordnete Aussparung und eine an einer Stirnseite angeordnete Öffnung auf. Die Aussparung ist fluidisch mit der Öffnung verbunden. Die Öffnung überlappt zumindest teilweise in der Schließ- und/oder der ersten Offenposition und/oder der zweiten Offenposition mit dem ersten Ventilanschluss. Der zweite Ventilanschluss überlappt zumindest teilweise in der ersten Offenposition mit der Aussparung und der dritte Ventilanschluss in der zweiten Offenposition mit der Aussparung. Dadurch kann ein besonders einfach ausgebildetes Mehrwegeventil bereitgestellt werden, das besonders verschleißarm ist.

In einer weiteren Ausführungsform weist das Ventilgehäuse einen vierten Ventilanschluss auf, wobei der vierte Ventilanschluss vorzugsweise auf einer zur Drehachse gegenüberliegenden Seite des dritten Ventilanschlusses angeordnet ist. Die Aussparung überlappt zumindest teilweise mit dem vierten Ventilanschluss in der ersten Offenposition.

In einer weiteren Ausführungsform sind der zweite Ventilanschluss und der vierte Ventilanschluss V-förmig zueinander in einer gemeinsamen Drehebene senkrecht zur Drehachse angeordnet.

Ferner ist von Vorteil, wenn wenigstens eine Dichteinrichtung vorgesehen ist, wobei die Dichteinrichtung axial angrenzend an die Aussparung angeordnet ist.

Die Aufgabe wird aber auch durch ein System gemäß Patentanspruch 10 gelöst.

Erfindungsgemäß wurde erkannt, dass ein verbessertes System dadurch bereitgestellt werden kann, dass das System einen Wärmespeicher, ein Mehrwegeventil, das wie oben beschrieben ausgebildet ist, einen Wärmetauscher und eine Einspeiseeinrichtung umfasst. Der Wärmetauscher ist mit einer Wärmequelle verbindbar und ausgebildet, ein Wärmeträgermedium zu erwärmen. Die Einspeiseeinrichtung ist ausgebildet, das Wärmeträgermedium in den Wärmespeicher einzuspeisen. Die Einspeiseeinrichtung umfasst eine erste Einspeiseöffnung und eine zweite Einspeiseöffnung. Die erste Einspeiseöffnung ist in Schwerkraftrichtung höher als die zweite Einspeiseöffnung angeordnet. Der erste Ventilanschluss ist mit einer sekundärseitigen Ausgangsseite des Wärmetauschers verbunden. Die erste Einspeiseöffnung ist mit einem zweiten Ventilanschluss und die zweite Einspeiseöffnung mit dem dritten Ventilanschluss des Mehrwegeventils fluidisch verbunden. Dadurch kann das erwärmte Wärmeträgermedium in Abhängigkeit der Temperatur unterschiedlich hoch in den Wärmespeicher eingespeist werden. Dadurch kann bei der Entnahme nach kurzer Zeit bereits warmes Wärmeträgermedium zur Entnahme aus dem Wärmespeicher bereitgestellt werden.

Die Aufgabe wird aber auch durch ein System gemäß Patentanspruch 11 gelöst. Vorteilhafte Ausführungsformen sind in den abhängigen Ansprüchen angegeben.

Das System umfasst einen Wärmespeicher, ein Mehrwegeventil, das wie oben beschrieben ausgebildet ist, einen Wärmetauscher und eine Einspeiseeinrichtung, die ebenso wie oben beschrieben ausgebildet ist. Der Wärmetauscher ist mit einer Wärmequelle verbindbar und ausgebildet, ein Wärmeträgermedium zu erwärmen. Die Einspeiseeinrichtung ist zumindest teilweise in dem Wärmespeicher angeordnet und ausgebildet, das Wärmeträgermedium in den Wärmespeicher einzuspeisen. Das Anschlussstück der Einspeiseeinrichtung ist mit einem Wärmespeicheranschluss des Wärmespeichers angeschlossen. Das Einspeiserohr ragt in einen Innenraum des Wärmespeichers. Der erste Anschluss der Einspeiseeinrichtung ist mit dem zweiten Ventilanschluss und der zweite Anschluss ist mit dem dritten Ventilanschluss fluidisch verbunden.

In einer weiteren Ausführungsform weist der Wärmespeicher ein Entnahmerohr auf, wobei das Entnahmerohr eine Entnahmeöffnung aufweist. Die Entnahmeöffnung ist in Schwerkraftrichtung zumindest teilweise tiefer angeordnet als die erste und/oder zweite Einspeiseöffnung.

In einer weiteren Ausführungsform sind eine Bypassleitung und eine Förderpumpe vorgesehen. Die Förderpumpe ist mit der Entnahmeeinrichtung fluidisch gekoppelt, wobei die Bypassleitung stromaufwärtsseitig der Förderpumpe mit der Entnahmeeinrichtung und mit dem vierten Ventilanschluss fluidisch verbunden ist. Dadurch wird eine besonders schnelle Erwärmung des Wärmeträgermediums gewährleistet, sodass nach kurzer Startzeit des Systems bereits für den Nutzer Warmwasser zur Entnahme zur Verfügung gestellt werden kann.

Die Aufgabe wird aber auch durch ein Verfahren gemäß Patentanspruch 14 gelöst.

Erfindungsgemäß wurde erkannt, dass ein verbessertes Verfahren zum Betrieb eines oben beschrieben Systems dadurch bereitgestellt werden kann, dass eine Temperatur des Wärmeträgermediums erfasst wird, wobei die Temperatur mit einem vordefinierten Schwellenwert in einem Vergleich verglichen wird, wobei in Abhängigkeit eines Ergebnisses des Vergleichs das Mehrwegeventil gesteuert wird.

Nachfolgend wird die Erfindung anhand von Figuren näher erläutert. Dabei zeigen:
Figur 1 eine schematische Darstellung eines Systems gemäß einer ersten Ausführungsform;
Figur 2 eine schematische Darstellung eines Systems gemäß einer zweiten Ausführungsform;
Figur 3 eine Schnittansicht durch ein Mehrwegeventil in einer ersten Offenposition;
Figur 4 eine Schnittansicht durch das in Figur 3 gezeigte Mehrwegeventil in einer zweiten Offenposition;
Figuren 5 bis 7 perspektivische Ansichten des in den Figuren 3 und 4 gezeigten Mehrwegeventils;
Figur 8 eine perspektivische Ansicht des in den Figuren 3 bis 7 gezeigten Mehrwegeventils in demontiertem Zustand;
Figur 9 eine perspektivische Ansicht des in den Figuren 3 bis 8 gezeigten Mehrwegeventils in teilmontiertem Zustand;
Figur 10 eine perspektivische Ansicht eines Ventilkörpers des in den Figuren 3 bis 9 gezeigten Mehrwegeventils;
Figuren 11 bis 13 perspektivische Ansichten einer Einspeiseeinrichtung des in Figur 2 gezeigten Heizungssystems; und
Figur 14 einen Ausschnitt des in Figur 2 gezeigten Heizungssystems in der ersten Offenposition des in den Figuren 3 bis 10 gezeigten Ventils;
Figur 15 einen Ausschnitt des in Figur 2 gezeigten Heizungssystems in der zweiten Offenposition des in den Figuren 3 bis 10 gezeigten Ventils;
Figur 16 ein Ablaufdiagramm eines Verfahrens zur Steuerung des in den Figuren 1 und 2 gezeigten Systems.

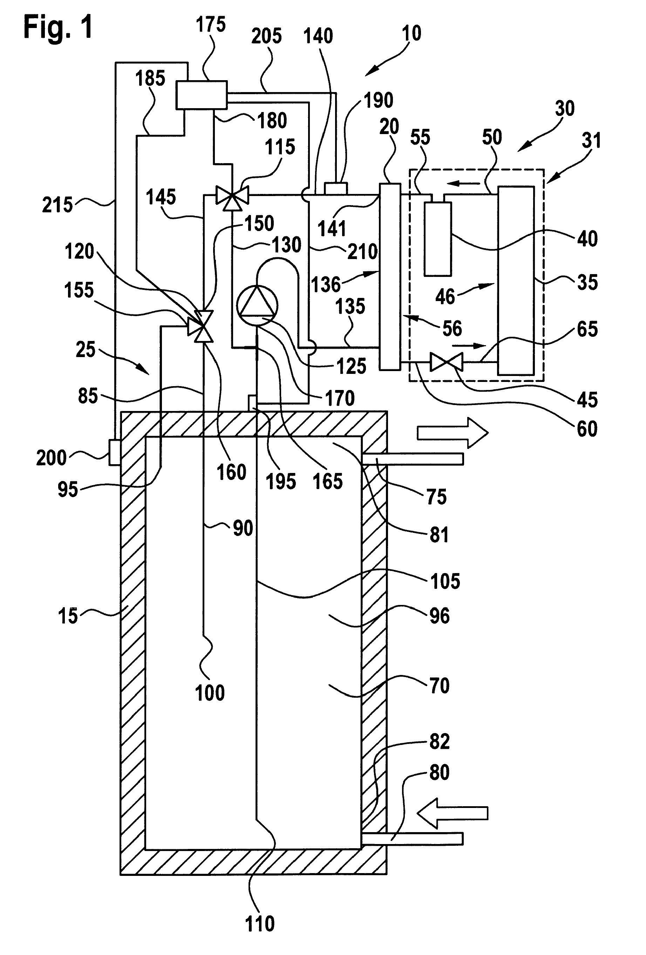

Figur 1 zeigt eine schematische Darstellung eines Systems 10 gemäß einer ersten Ausführungsform.

Das System 10 umfasst einen Wärmespeicher 15, einen Wärmetauscher 20 und eine Einspeiseeinrichtung 25. Der Wärmetauscher 20 ist primärseitig mit einer

Wärmequelle 30 verbunden. Die Wärmequelle 30 umfasst dabei einen Wärmepumpenkreislauf 31. Der Wärmepumpenkreislauf umfasst einen zweiten Wärmetauscher 35, einen Verdichter 40 und eine Expansionseinrichtung 45. Selbstverständlich kann die Wärmequelle 30 auch andersartig ausgebildet sein und/oder mehr als eine Energieart zur Bereitstellung von Wärme nutzen. So kann beispielweise die Wärmequelle 30 einen Ölbrenner oder einen Gasbrenner und/oder eine solarthermische Anlage umfassen.

Eine Sekundärseite 46 des zweite Wärmetauschers 35 ist über eine erste Leitung 50 mit dem Verdichter 40 verbunden. Ausgangsseitig ist der Verdichter 40 über eine zweite Leitung 55 mit einer Primärseite 56 des ersten Wärmetauschers 20 verbunden. Ausgangsseitig an der Primärseite 56 ist der erste Wärmetauscher 20 über eine dritte Leitung 60 mit der Expansionseinrichtung 45 verbunden. Die Expansionseinrichtung 45 ist über eine vierte Leitung 65 mit dem zweiten Wärmetauscher 35 verbunden. Der zweite Wärmetauscher 35 kann beispielsweise primärseitig beispielsweise mit der Umgebung verbunden. Dabei dient der zweite Wärmetauscher 35 als Verdampfer und der erste Wärmetauscher 20 als Kondensator. Die erste bis vierte Leitung 50, 55, 60, 65 sowie die Primärseite 56 des ersten Wärmetauschers 20 und die Sekundärseite 46 des zweiten Wärmetauschers 35 sind mit einem ersten Wärmeträgermedium füllbar, das beispielsweise als Kältemittel ausgebildet ist.

Ein Innenraum 96 des Wärmespeichers 15 ist mit einem zweiten Wärmeträgermedium 70 füllbar. Das zweite Wärmeträgermedium 70 weist vorzugsweise überwiegend Wasser auf. Der Wärmespeicher dient dabei als Warmwasserspeicher, insbesondere für Trinkwasser, für ein Frischwasserversorgungsnetz eines Gebäudes. Der Wärmespeicher 15 weist einen Entnahmeanschluss 75 und einen Einspeiseanschluss 80 auf. Der Entnahmeanschluss 75 ist dabei mit dem Frischwasserversorgungsnetz verbindbar. Der Einspeisanschluss 80 ist mit einem Wasserversorgungsnetz verbindbar. Der Einspeiseanschluss 80 ist dabei in Schwerkraftrichtung unterhalb des Entnahmeanschlusses 75, vorzugsweise angrenzend an ein unteres Ende 82 des Innenraums 96 angeordnet. Der Entnahmeanschluss 80 ist vorzugsweise angrenzend an ein oberes Ende 81 des Innenraums 96 des Wärmespeichers 15 angeordnet. Selbstverständlich ist auch denkbar, dass der Einspeiseanschluss 80 und/oder der Entnahmeanschluss 75 mit wenigstens einem weiteren Wärmetauscher eines Heizsystems eines Gebäudes fluidisch verbunden ist.

Die Einspeiseeinrichtung 25 weist ein erstes Einspeiserohr 85 und ein zweites Einspeiserohr 90 auf. Die beiden Einspeiserohre 85, 90 ragen in den Innenraum 96 des Wärmespeichers 15 und verlaufen im Wesentlichen in Schwerkraftrichtung. Dabei ist das erste Einspeiserohr 85 beispielhaft parallel zum zweiten Einspeiserohr 90 angeordnet.

Das erste Einspeiserohr 85 weist an seinem unteren freien Ende eine erste Einspeiseöffnung 95 und das zweite Einspeiserohr 90 an seinem unteren freien Ende eine zweite Einspeiseöffnung 100 auf. Die zweite Einspeiseöffnung 100 ist dabei in Schwerkraftrichtung tiefer als die erste Einspeiseöffnung 95 angeordnet.

Ferner ist von Vorteil, wenn die erste Einspeiseöffnung 95 am oberen Ende 81, beispielsweise im Bereich von 0 bis 10 % einer maximalen Erstreckung des Innenraums 96 in Schwerkraftrichtung, und/oder die zweite Einspeiseöffnung 100 etwa in mittiger Lage, vorteilhafterweise in einem Bereich von 40 bis 60 % der maximalen Erstreckung des Innenraums 96 des Wärmespeichers 15 in Schwerkraftrichtung, angeordnet ist. Selbstverständlich ist auch denkbar, dass die beiden Einspeiseöffnungen 95, 100 an einer anderen Position angeordnet sind.

Ferner umfasst das System 10 eine in den Innenraum 96 einragende Entnahmeeinrichtung 105. Die Entnahmeeinrichtung 105 ist als Rohr ausgebildet und weist eine Entnahmeöffnung 110 an ihrem unteren freien Ende auf, die im Wesentlichen an einem unteren Ende 82 des Innenraums 96 des Wärmespeichers 15 und somit in Schwerkraftrichtung tiefer als die erste und/oder zweite Einspeiseöffnung 95, 100 angeordnet ist.

Ferner umfasst das System 10 ein erstes Mehrwegeventil 115 und ein zweites Mehrwegeventil 120. Die Mehrwegeventile 115, 120 sind dabei als Dreiwegeventil ausgebildet.

Ferner umfasst das System 10 eine Förderpumpe 125 sowie eine Bypassleitung 130. Die Förderpumpe 125 ist über eine fünfte Leitung 135 mit einer Sekundärseite 136 des ersten Wärmetauschers 20 verbunden.

Ausgangsseitig des ersten Wärmetauschers 20 ist das erste Mehrwegeventil 115 über eine sechste Leitung 140 mit einer sekundärseitigen Ausgangsseite 141 des ersten Wärmetauschers 20 verbunden. Ferner ist das erste Mehrwegeventil 115 mit der Bypassleitung 130 verbunden.

Das zweite Mehrwegeventil 120 umfasst einen ersten Ventilanschluss 150, einen zweiten Ventilanschluss und wenigstens einen dritten Ventilanschluss. Das erste Mehrwegeventil 115 ist über eine siebte Leitung 145 mit dem ersten Ventilanschluss 150 des zweiten Mehrwegeventils 120 verbunden. Das zweite Mehrwegeventil 120 ist mit einem zweiten Ventilanschluss 155 mit dem ersten Einspeiserohr 85 und mit dem dritten Ventilanschluss 160 mit dem zweiten Einspeiserohr 90 verbunden.

Die Bypassleitung 130 ist eingangsseitig der Förderpumpe 125 mit einem T-Stück 165 verbunden, wobei das T-Stück 165 ferner mit einer Eingangsseite 170 der Förderpumpe 125 und mit der Entnahmeeinrichtung 105 verbunden ist.

Ferner ist ein Steuergerät 175 vorgesehen, das über eine erste Verbindung 180 mit dem ersten Mehrwegeventil 115 verbunden ist. Über eine zweite Verbindung 185 ist das Steuergerät 175 mit dem zweiten Mehrwegeventil 120 verbunden. Das Steuergerät 175 ist ausgebildet, mittels wenigstens eines Steuersignals eine Ventilstellung des ersten Mehrwegeventils 115 und/oder des zweiten Mehrwegeventils 120 zu steuern.

Ferner ist ein erster Temperatursensor 190 vorgesehen, der angrenzend an die Ausgangsseite 141 des ersten Wärmetauschers 20 angeordnet ist. Des Weiteren ist ein zweiter Temperatursensor 195 vorgesehen, der an der Entnahmeeinrichtung 105 stromaufwärtsseitig des T-Stücks 165 angeordnet ist. Des Weiteren ist ein dritter Temperatursensor 200 vorgesehen, der am oberen Ende des Wärmespeichers 15 angeordnet ist. Der erste Temperatursensor 190 ist über eine vierte Verbindung 205 mit dem Steuergerät 175 verbunden. Der zweite Temperatursensor 195 ist über eine fünfte Verbindung 210 mit dem Steuergerät 175 verbunden. Der dritte Temperatursensor 200 ist über eine sechste Verbindung 215 mit dem Steuergerät 175 verbunden.

Der erste Temperatursensor 190 ist ausgebildet, eine erste Temperatur T1 des zweiten Wärmeträgermediums 70 bei Verlassen des ersten Wärmetauschers 20 zu erfassen. Der erste Temperatursensor 190 stellt entsprechend zur erfassten ersten Temperatur T1 des zweiten Wärmeträgermediums 70 ein korrespondierendes erstes Temperatursignal dem Steuergerät 175 bereit, das das erste Temperatursignal erfasst.

Der zweite Temperatursensor 195 erfasst eine zweite Temperatur T2 des zweiten Wärmeträgermediums 70 bei Verlassen des Wärmespeichers 15. Der zweite Temperatursensor 195 stellt entsprechend zur erfassten zweiten Temperatur T2 ein zweites Temperatursignal über die fünfte Verbindung 210 dem Steuergerät 175 bereit. Das Steuergerät 175 erfasst das bereitgestellte zweite Temperatursignal.

Der dritte Temperatursensor 200 erfasst eine dritte Temperatur T3 des zweiten Wärmeträgermediums 70 am oberen Ende 81 des Innenraums 96 des Wärmespeichers 15. Die dritte Temperatur T3 ist dabei im Wesentlichen die Temperatur, mit der das zweite Wärmeträgermedium 70 über den Entnahmeanschluss 75 aus dem Wärmespeicher 15 gefördert wird und zu einer Entnahmestation gefördert wird. Der dritte Temperatursensor 200 stellt entsprechend zur erfassten dritten Temperatur ein drittes Temperatursignal über die sechste Verbindung 215 dem Steuergerät 175 bereit. Das Steuergerät 175 erfasst das dritte Temperatursignal.

Im Steuergerät 175 ist in einem Speicher (nicht dargestellt) ein erster Schwellenwert S1, ein zweiter Schwellenwert S2 und ein dritter Schwellenwert S3 abgelegt. Die Schwellenwerte S1, S2, S3 korrelieren dabei mit unterschiedlichen Temperaturen des zweiten Wärmeträgermediums 70.

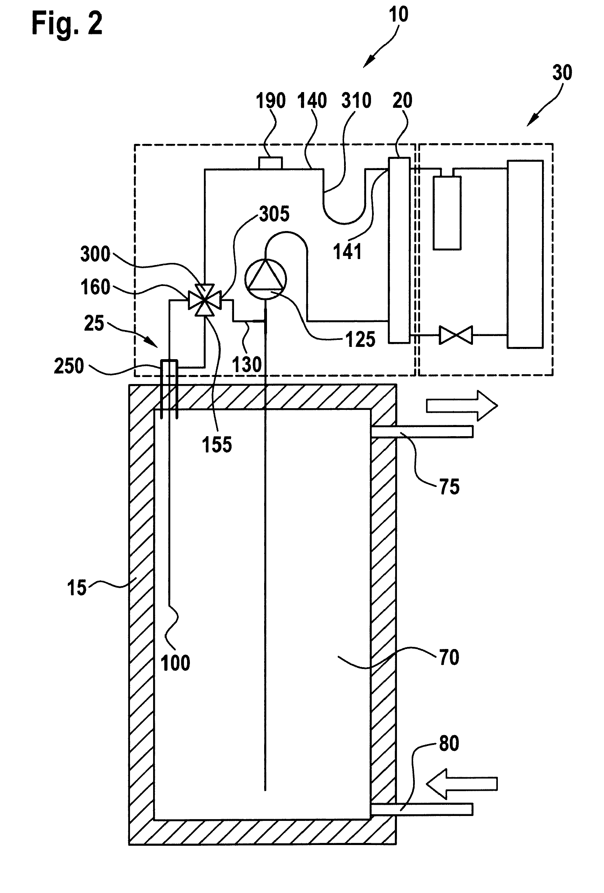

Figur 2 zeigt eine schematische Darstellung eines Systems 10 gemäß einer zweiten Ausführungsform. Das System 10 ist im Wesentlichen identisch zu dem in Figur 1 gezeigten System 10 ausgebildet. Abweichend dazu ist in dem System 10 auf das erste Mehrwegeventil 115 verzichtet worden. Anstatt des in Figur 1 gezeigten zweiten Mehrwegeventils 120 weist das System 10 ein Mehrwegeventil 300 auf, das als Vierwegeventil ausgebildet ist und zusätzlich zum in Figur 1 gezeigten zweiten Mehrwegeventil einen vierten Ventilanschluss 305 aufweist. Der vierte Ventilanschluss 305 ist dabei mit der Bypassleitung 130 fluidisch verbunden. Ferner fehlt die siebte Leitung 145.

Zusätzlich ist in der sechsten Leitung 140 eine Zusatzheizeinrichtung 310 angeordnet. Dabei ist der erste Temperatursensor 190 stromabwärtsseitig der Zusatzheizeinrichtung 310 angeordnet. Die Zusatzheizeinrichtung 310 ist ausgebildet, das aus der Ausgangsseite 141 ausströmende Wärmeträgermedium bei zu geringer Temperatur zusätzlich aufzuwärmen.

Der Wärmespeicher 15 weist in der Ausführungsform einen einzigen Wärmespeicheranschluss 250 auf, an dem die Einspeiseeinrichtung 25 angeschlossen ist und den Innenraum 96 mit dem Mehrwegeventil 300 fluidisch verbindet.

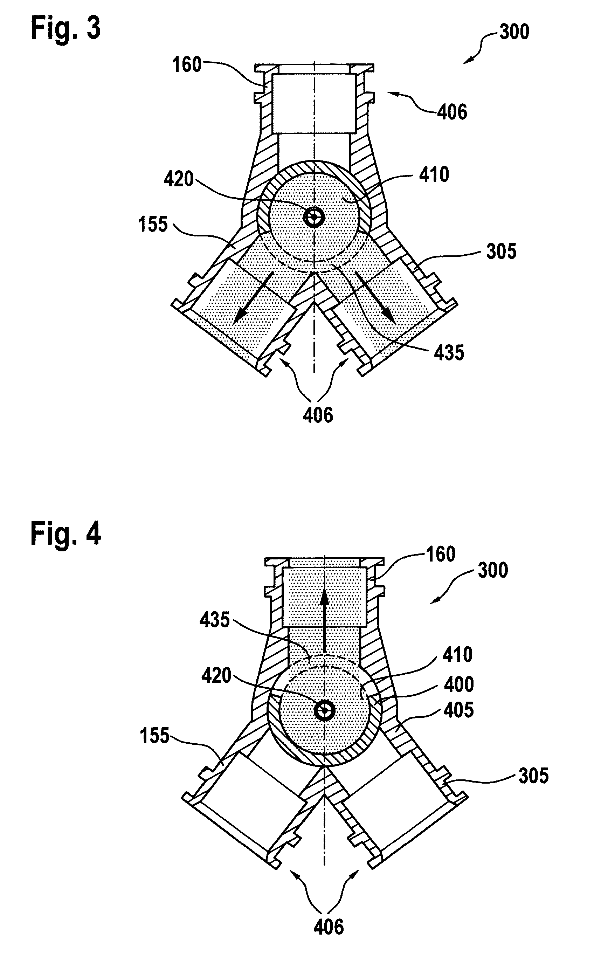

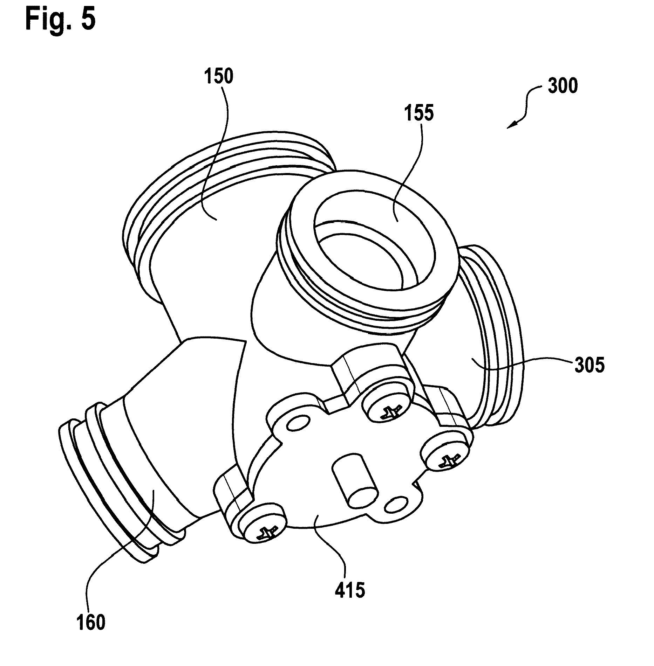

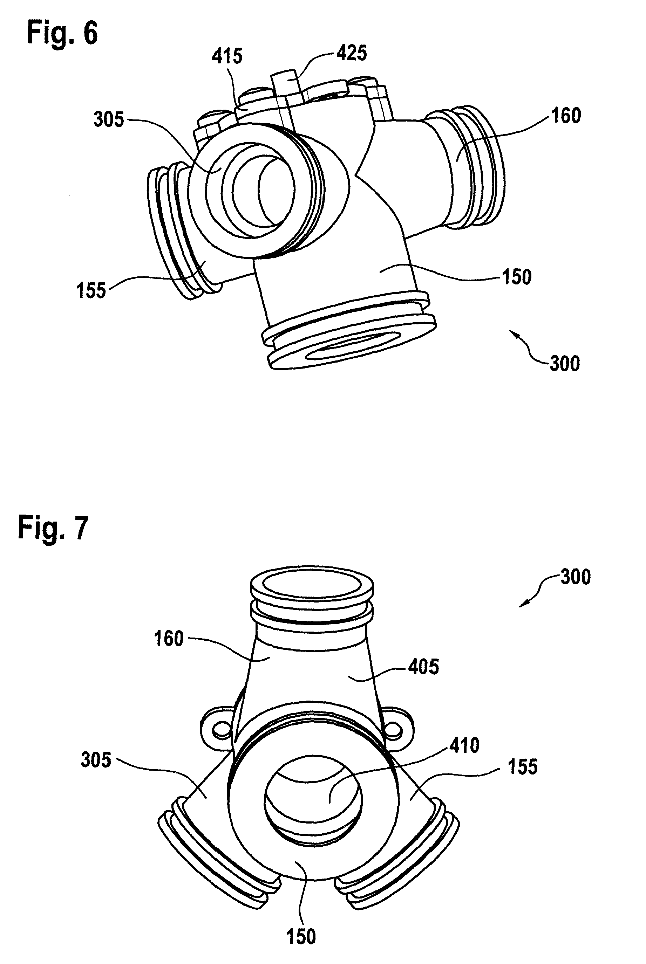

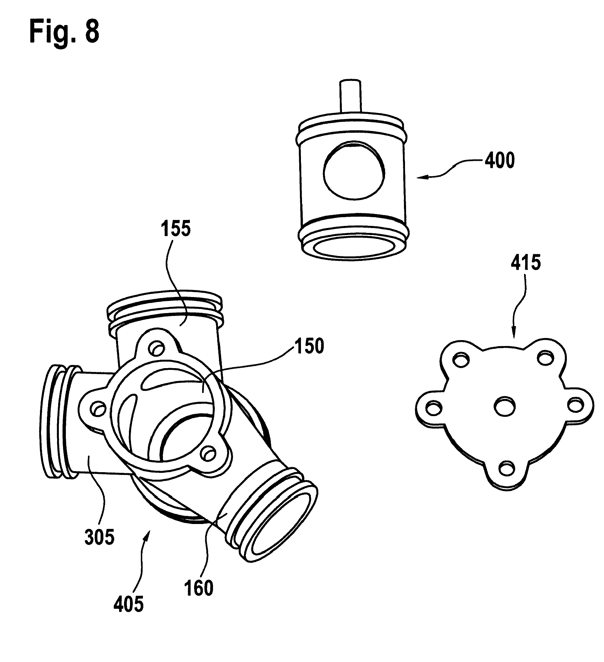

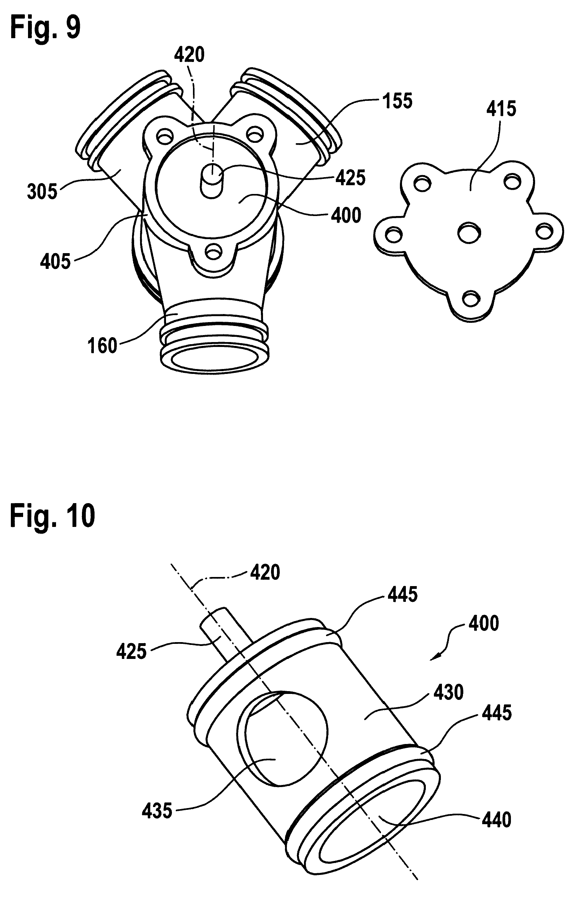

Figur 3 zeigt eine Schnittansicht durch das in Figur 2 gezeigte Mehrwegeventil 300. Figur 4 zeigt eine Schnittansicht durch das in Figur 2 gezeigte Mehrwegeventil 300 in einer ersten Offenposition und Figur 4 zeigt eine Schnittansicht durch das in Figur 3 gezeigte Mehrwegeventil 300 in einer zweiten Offenposition. Figuren 5 bis 7 zeigen perspektivische Ansichten des in den Figuren 3 und 4 gezeigten Mehrwegeventils 300. Figur 8 zeigt eine perspektivische Ansicht des in Figuren 3 bis 7 gezeigten Mehrwegeventils 300 in demontiertem Zustand und Figur 9 zeigt eine perspektivische Ansicht des in Figuren 3 bis 8 gezeigten Mehrwegeventils 300 in einem teilmontierten Zustand. Figur 10 zeigt eine perspektivische Ansicht eines Ventilkörpers 400 des in den Figuren 3 bis 9 gezeigten Mehrwegeventils 300. Nachfolgend sollen die Figuren 3 bis 10 gemeinsam erläutert werden.

Das Mehrwegeventil 300 weist neben dem Ventilkörper 400 ein Ventilgehäuse 405 auf, das die Ventilanschlüsse 150, 155, 160, 305 aufweist. Die Ventilanschlüsse 150, 155, 160, 305 dienen dazu, die Leitungen 145, 130 und die Einspeiseeinrichtung 25 mechanisch mit dem Mehrwegeventil 300 zu verbinden. Die Ventilanschlüsse 150, 155, 160, 305 sind dabei hohlzylindrisch ausgebildet und weisen umfangsseitig jeweils eine Befestigungseinrichtung 406 auf. Mittels der Befestigungseinrichtung 406 wird der jeweilige Ventilanschluss 150, 155, 160, 305 mit der Einspeiseeinrichtung 25, der Bypassleitung 130 oder der sechsten Leitung 145 mechanisch verbunden, sodass ein Übergang zwischen dem Mehrwegeventil 300 und den Leitungen 130, 145 oder der Einspeiseeinrichtung 25 fluidisch dicht ausgebildet ist.

Das Ventilgehäuse 405 weist einen Gehäuseinnenraum 410 auf, in dem der Ventilkörper 400 angeordnet ist. Dabei ist der Gehäuseinnenraum 410 korrespondierend zum Ventilkörper 400 zylinderförmig ausgebildet und umgreift umfangsseitig den Ventilkörper 400. Dabei ist das Ventilgehäuse 405 auf einer zum ersten Ventilanschluss 150 gegenüberliegenden Seite mittels eines Gehäusedeckels 415 fluidisch dichtend abgeschlossen.

Der Ventilkörper 400 ist drehbar um eine Drehachse 420 in dem Ventilgehäuse 405 gelagert. Dabei kann der Ventilkörper 400 zwischen einer ersten Offenposition, wie in Figur 3 gezeigt, und einer zweiten Offenposition, wie in Figur 4 gezeigt, um die Drehachse 420 verdreht werden. Zwischen der ersten Offenposition und der zweiten Offenposition ist das Mehrwegeventil 300 in einer Schließposition. Dabei wird ein Fluidstrom des zweiten Wärmeträgermediums 70 zwischen dem ersten Ventilanschluss 150 und dem dritten Ventilanschluss 160 und/oder dem ersten Ventilanschluss 150 und dem zweiten Ventilanschluss 155 und dem vierten Ventilanschluss 305 unterbrochen.

Der zweite Ventilanschluss 155 und der vierte Ventilanschluss 305 sind zusammen mit dem dritten Ventilanschluss 160 in einer gemeinsamen Drehebene senkrecht zur Drehachse 420 angeordnet. Der erste Ventilanschluss 150 erstreckt sich dabei in Richtung der Drehachse 420 und ist somit senkrecht zum zweiten, dritten und vierten Ventilanschluss 155, 160, 305 ausgerichtet. Der zweite Ventilanschluss 155 und der vierte Ventilanschluss 305 sind dabei V-förmig zueinander angeordnet. Der dritte Ventilanschluss 160 ist auf einer bezogen auf die Drehachse 420 gegenüberliegenden Seite des Ventilgehäuses 405 zu dem zweiten und vierten Ventilanschluss 150, 305 angeordnet.

Der Ventilkörper 400 (vgl. Figur 10) weist eine hohlzylindrische Ausgestaltung auf. Dabei ist an einer ersten Stirnseite ein Zapfen 425 vorgesehen, mit dem der Ventilkörper 400 mit einem Stellmotor (nicht dargestellt) mechanisch verbunden werden kann. Der Stellmotor ist dabei mit dem Steuergerät 175 verbunden und dient dazu, den Ventilkörper 400 um die Drehachse 420 zu verdrehen. An einer äußeren Umfangsfläche 430 weist der Ventilkörper 400 eine Aussparung 435 auf. An einer zum Zapfen 425 gegenüberliegenden zweiten Stirnseite weist der Ventilkörper 400 eine Öffnung 440 auf. Der Ventilkörper 400 ist zwischen der Aussparung 435 und der Öffnung 440 hohlzylindrisch ausgebildet, sodass die Aussparung 435 mit der Öffnung 440 fluidisch verbunden ist. Axial angrenzend an die Aussparung 435 weist der Ventilkörper 400 jeweils eine Dichteinrichtung 445 auf. Die Aussparung 435 ist kreisförmig ausgebildet. Denkbar sind auch andere Ausgestaltungen wie z.B. schlitzförmig.

In allen Positionen, in die der Ventilkörper 400 gegenüber dem Ventilgehäuse 405 verdreht werden kann, überlappt die Öffnung 440 mit dem ersten Ventilanschluss 150 durch die konzentrische Anordnung des ersten Ventilanschlusses 150 zu der Öffnung 440. Die fluidische Verbindung des ersten Ventilanschlusses 150 mit den weiteren Ventilanschlüssen 155, 160, 305 erfolgt durch die Aussparung 435. Die Aussparung 435 ist dabei axial auf Höhe des zweiten, dritten, vierten Ventilanschlusses 155, 160, 305 angeordnet. Wird der Ventilkörper 400 in die erste Offenposition verdreht, so überlappt zumindest teilweise in einer Projektion zu einer Ebene, die parallel zur Drehachse 420 ausgerichtet ist, die Aussparung 435 mit dem zweiten Ventilanschluss 155 und dem vierten Ventilanschluss 305, sodass in der ersten Offenposition der erste Ventilanschluss 150 mit dem zweiten Ventilanschluss 155 und dem vierten Ventilanschluss 305 fluidisch verbunden sind. Dabei weist in Umfangsrichtung die Aussparung 435 bezogen auf die Drehachse 420 einen ersten maximalen Öffnungswinkel auf, der zumindest ähnlich zu einem zweiten maximalen Öffnungswinkel ist, der aus dem zweiten Ventilanschluss 155 und dem vierten Ventilanschlusses 305 bezogen auf die Drehachse 420 bestimmt ist. Dabei gehen in der ersten Offenposition der zweite und der vierte Ventilanschluss 155, 305 ineinander über. Dadurch kann die Aussparung 435 gleichzeitig mit dem zweiten Ventilanschluss 155 und dem vierten Ventilanschluss 305 überlappen und diese mit dem ersten Ventilanschluss 150 fluidisch verbinden.

In der zweiten Offenposition (vgl. Figur 4) überlappt in einer Projektion zu einer Ebene, die parallel zur Drehachse 420 ausgerichtet ist, der dritte Ventilanschluss 160 mit der Aussparung 435, sodass der erste Ventilanschluss 150 mit dem dritten Ventilanschluss 160 verbunden ist.

Selbstverständlich ist auch denkbar, dass die Aussparung 435 andersartig ausgebildet ist. Wesentlich dabei ist jedoch, dass in der ersten Offenposition keine fluidische Verbindung zwischen dem ersten Ventilanschluss 150 und dem dritten Ventilanschluss 160 bzw. in der zweiten Offenposition keine fluidische Verbindung des zweiten und des vierten Ventilanschlusses 155, 305 zu dem ersten Ventilanschluss 150 besteht.

Diese Ausgestaltung hat den Vorteil, dass der Ventilkörper 400 durch eine einfache Verdrehung zwischen den einzelnen Positionen verstellt werden kann und so ein besonders verschleißarmes Mehrwegeventil 300 bereitgestellt werden kann.

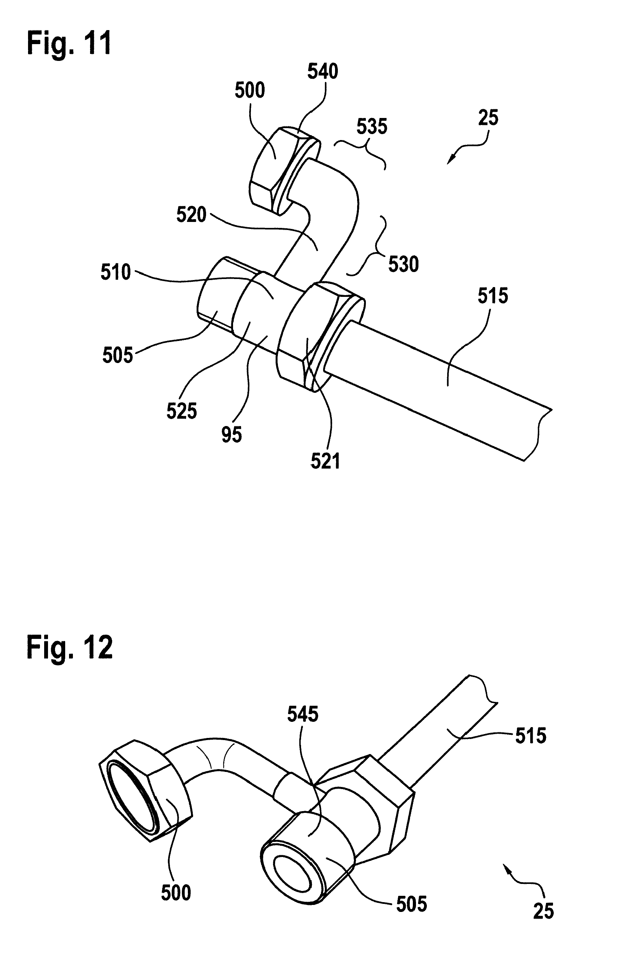

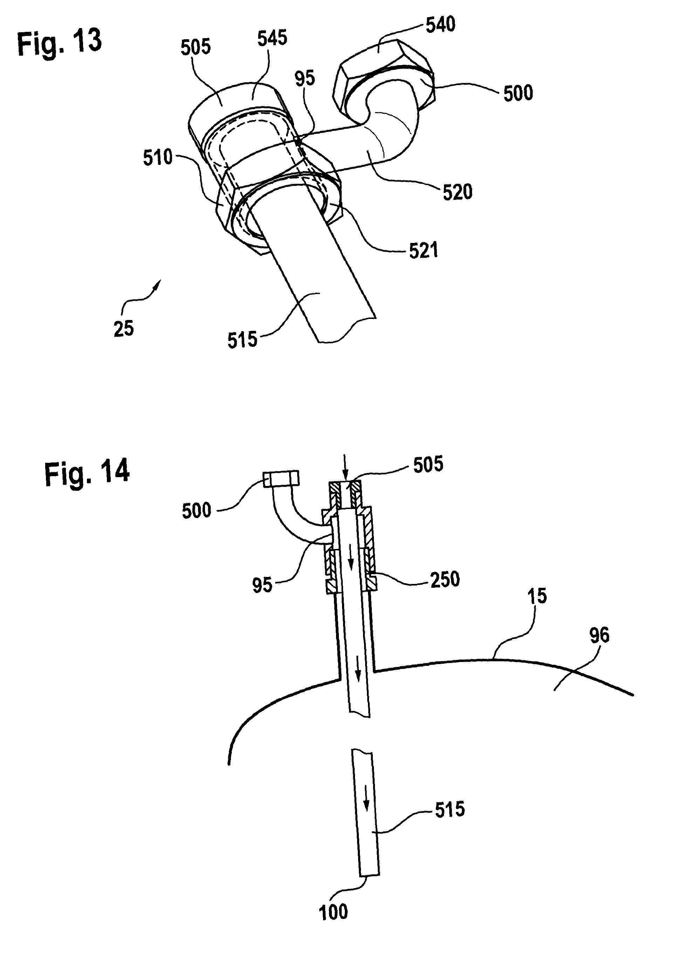

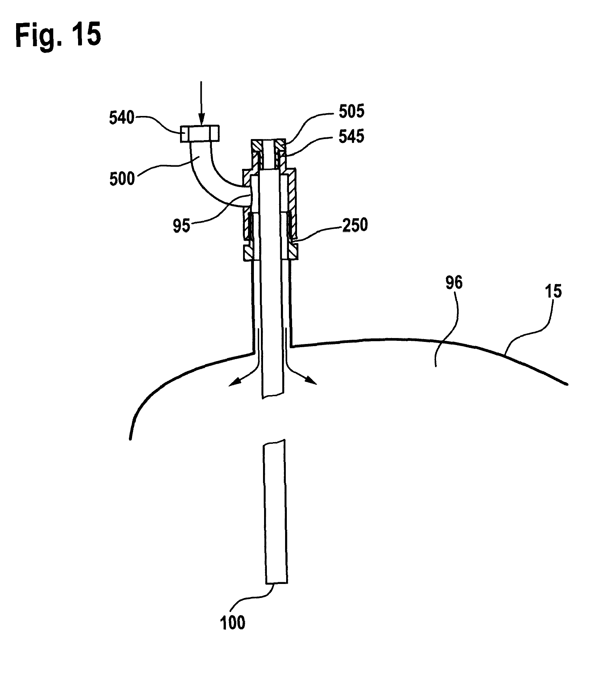

Figuren 11 bis 13 zeigen perspektivische Ansichten der Einspeiseeinrichtung 25 des in Figur 2 gezeigten Systems 10. Figur 14 zeigt einen Ausschnitt des in Figur 2 gezeigten Systems in der ersten Offenposition des in den Figuren 3 bis 10 gezeigten Mehrwegeventils 300 und Figur 15 zeigt einen Ausschnitt des in Figur 2 gezeigten Systems in der zweiten Offenposition des in den Figuren 3 bis 10 gezeigten Mehrwegeventils 300.

Die Einspeiseeinrichtung 25 weist einen ersten Anschluss 500, einen zweiten Anschluss 505, ein Anschlussstück 510 und ein Einspeiserohr 515 auf. Der zweite Anschluss 505 ist dabei an dem Anschlussstück 510 angeordnet. Der erste Anschluss 500 ist mittels einer Verbindungsleitung 520 fluidisch mit dem Anschlussstück 510 verbunden.

Das Anschlussstück 510 ist dabei hohlzylindrisch ausgebildet und das Einspeiserohr 515 wird durch das Anschlussstück 510 in Längsrichtung des Anschlussstücks 510 geführt, so dass das Einspeiserohr 515 koaxial zu dem Anschlussstück 510 ausgerichtet ist. Dabei ist das Einspeiserohr 515 mit dem zweiten Anschluss 505 verbunden. Das Anschlussstück 510 wird in montiertem Zustand an dem Wärmespeicheranschluss 250 des Wärmespeichers 15 mittels einer ersten Verschraubung 521 befestigt.

In der Ausführungsform ist das Einspeiserohr 515 geradlinig ausgebildet. Selbstverständlich ist auch denkbar, dass das Einspeiserohr 515 gekrümmt ausgeführt ist. Dabei ist das Einspeiserohr 515 mit einem festen Ende 525 mit dem zweiten Anschluss 505 verbunden. An dem freien Ende des Einspeiserohrs 515 ist die zweite Einspeiseöffnung 100 angeordnet. Das Einspeiserohr 515 ragt in montiertem Zustand in den Innenraum 96.

Die Verbindungsleitung 520 umfasst einen ersten Abschnitt 530 und einen zweiten Abschnitt 535. Der erste Abschnitt 530 ist im Wesentlichen senkrecht zum Einspeiserohr 515 ausgerichtet. Dabei ist der erste Abschnitt 530 angrenzend an das Anschlussstück 510 angeordnet und an diesem befestigt. Der erste Abschnitt 530 mündet innenseitig des Anschlussstücks 510 mit der ersten Einspeiseöffnung 95. Dadurch sind die erste Einspeiseöffnung 95 und die zweite Einspeiseöffnung 100 beabstandet zueinander angeordnet. Der zweite Abschnitt 535 ist im Wesentlichen senkrecht zum ersten Abschnitt 530 ausgerichtet. An dem zweiten Abschnitt 535 ist der erste Anschluss 500 angeordnet. Dadurch kann quer zu einer Erstreckungsrichtung des Einspeiserohrs 515 der erste Anschluss 500 versetzt zu dem zweiten Anschluss 505 angeordnet werden. Dadurch kann auf einfache Weise der Anschluss der Einspeiseeinrichtung 25 in der Montage des Systems 10 erleichtert werden.

Selbstverständlich ist auch denkbar, dass der zweite Abschnitt 535 andersartig zu dem ersten Abschnitt 530 ausgerichtet ist. So ist beispielsweise auch eine schräge oder identische Ausrichtung des zweiten Abschnitts 535 zu dem ersten Abschnitt 530 der Verbindungsleitung 520 denkbar.

In den Figuren 11 bis 13 ist am ersten Anschluss 500 eine zweite Verschraubung 540 und am zweiten Anschluss 505 eine dritte Verschraubung 545 vorgesehen. Mittels der zweiten Verschraubung 545 wird der erste Anschluss 500 ist mit dem zweiten Ventilanschluss 155 fluidisch verbunden. Der zweite Anschluss 505 ist fluidisch mittels der dritten Verschraubung 545 mit dem dritten Ventilanschluss 160 verbunden. Selbstverständlich ist auch denkbar, dass der Anschluss 500, 505 andersartig mit dem Mehrwegeventil 300 oder mit einer entsprechenden Leitung zur Verbindung des Anschlusses 500, 505 mit dem Mehrwegeventil 300 verbunden wird.

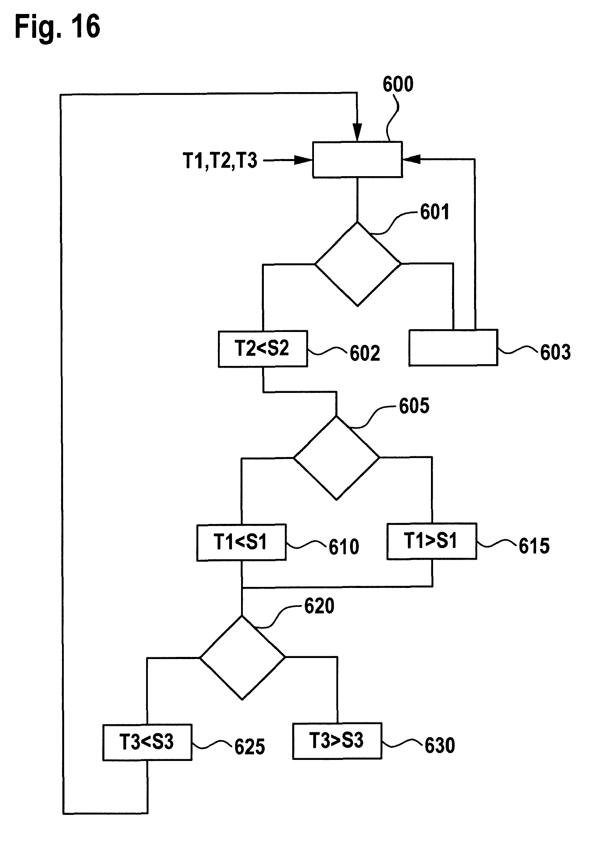

Figur 16 zeigt ein Ablaufdiagramm für ein Verfahren zum Betrieb des in den Figur 2 gezeigten Systems 10.

In einem ersten Verfahrensschritt 600 erfasst das Steuergerät 175 die Temperatursignale.

In einem zweiten Verfahrensschritt 601 vergleicht das Steuergerät 175 die mit dem zweiten Temperatursignal korrellierende zweite Temperatur T2 mit dem im Speicher abgelegten zweiten Schwellenwert S2. Der zweite Schwellenwert S2 korreliert dabei mit einer Temperatur des zweiten Wärmeträgermediums 70, das mit einem Verbrauch von erwärmtem Wärmeträgermedium 70 korreliert und somit bei einem Unterschreiten des zweiten Schwellenwerts S2 eine Wärmeanforderung an das System 10 signalisiert. Ist die zweite Temperatur T2 des zweiten Temperatursignals kleiner als der zweite Schwellenwert S2, so fährt das Steuergerät 175 mit dem dritten Verfahrensschritt 602 fort. Ist das zweite Temperatursignal bzw. die zweite Temperatur T2 größer als der zweite Schwellenwert S2, fährt das Steuergerät 175 mit einem vierten Verfahrensschritt 603 fort.

Im dritten Verfahrensschritt 602 aktiviert das Steuergerät 175 die Wärmequelle 30 und die Förderpumpe 125. Im vierten Verfahrensschritt 603 kann ein vordefinierter Zeitraum abgewartet werden, bis das Steuergerät 175 nach dem vierten Verfahrensschritt 603 wieder mit ersten Verfahrensschritt 600 beginnt.

Auf den dritten Verfahrensschritt 602 folgt der fünfte Verfahrensschritt 605. Im fünften Verfahrensschritt 605 vergleicht das Steuergerät 175 das erste Temperatursignal, das mit der ersten Temperatur T1 korreliert, mit dem ersten Schwellenwert S1. Unterschreitet dabei die erste Temperatur T1 den zweiten Schwellenwert S1, so fährt das Steuergerät 175 mit dem sechsten Verfahrensschritt 610 fort. Überschreitet die erste Temperatur T1 den ersten Schwellenwert S1, so fährt das Steuergerät 175 mit dem siebten Verfahrensschritt 615 fort.

Im sechsten Verfahrensschritt 610 steuert das Steuergerät 175 das Mehrwegeventil 300 derart an, dass das Mehrwegeventil 300 in die erste Offenstellung verfahren wird (vgl. Figur 14). Somit wird das zweite Wärmeträgermedium 70 vom Wärmetauscher 20 über die sechste Leitung 140 zum Mehrwegeventil 300 gefördert. Dabei teilt das Mehrwegeventil 300 den Strom des zweiten Wärmeträgermediums 70 auf, so dass ein erster Teil des zweiten Wärmeträgermediums vom Mehrwegeventil 300 über die Bypassleitung 130 eingangsseitig zur Förderpumpe 125 gefördert wird. Gleichzeitig strömt ein zweiter Teil des zweiten Wärmeträgermediums über den zweiten Ventilanschluss 155 zum ersten Anschluss 500 der Einspeiseeinrichtung 25 und über die erste Einspeiseöffnung 95 in den Wärmespeicher 15. Dies hat zur Folge, dass das über die Bypassleitung 130 strömende zweite Wärmeträgermedium 70 mit über die Entnahmeeinrichtung 105 entnommenem (kaltem) zweiten Wärmeträgermedium 70 vermischt wird. Dadurch wird das zweite Wärmeträgermedium 70, das in die Förderpumpe 125 strömt, erwärmt. Dadurch kann der erste Wärmetauscher 20 das zweite Wärmeträgermedium 70 auf ein besonders hohes Temperaturniveau erwärmen, bevor es in den Innenraum 96 über die erste Einspeiseöffnung geführt wird.

Im siebten Verfahrensschritt 615 steuert das Steuergerät 175 das Mehrwegeventil 300 derart an, dass das Mehrwegeventil 300 in die zweite Offenstellung gefahren wird (vgl. Figur 15) und somit der dritte Ventilanschluss 160 mit dem ersten Ventilanschluss 150 verbunden wird. Dadurch strömt das zweite Wärmeträgermedium 70 ausschließlich von der sechsten Leitung 140 in das Einspeiserohr 515 und tritt über die zweite Einspeiseöffnung 100 in den Wärmespeicher 15 in Schwerkraftrichtung tiefer liegend als die erste Einspeiseöffnung 95 ein.

Auf den sechsten und siebten Verfahrensschritt 610, 615 folgt der achte Verfahrensschritt. In dem achten Verfahrensschritt 620 vergleicht das Steuergerät 175 die mit dem dritten Temperatursignal korrelierende dritte Temperatur T3 mit dem im Speicher abgelegten dritten Schwellenwert S3. Ist die dritte Temperatur T3 des dritten Temperatursignals kleiner als der dritte Schwellenwert S3, so fährt das Steuergerät 175 mit einem neunten Verfahrensschritt 625 fort. Ist das dritte Temperatursignal bzw. die dritte Temperatur T3 größer als der dritte Schwellenwert S3, fährt das Steuergerät 175 mit einem zehnten Verfahrensschritt 630 fort.

Im neunten Verfahrensschritt 625 kann das Steuergerät 175 ein vordefiniertes weiteres Zeitintervall abwarten, bis es nach dem neunten Verfahrensschritt 625 mit dem ersten Verfahrensschritt 600 fortfährt.

Im zehnten Verfahrensschritt 630 deaktiviert das Steuergerät 175 die Wärmequelle 30 sowie die Förderpumpe 125.

Die oben beschriebene Ausgestaltung des Systems 10 hat den Vorteil, dass mittels der Einspeiseeinrichtung 25 unvorteilhafterweise mit dem in den Figuren 3 bis 10 beschriebenen Mehrwegeventil 300 eine Nachrüstmöglichkeit für bestehende Systeme 10 geschaffen wird, bei denen zuverlässig warmes Wasser auch nach mehrmaliger Wasserentnahme über den Entnahmeanschluss 75 bereitgestellt werden soll.

Zusätzlich ist dabei denkbar, dass im sechsten Verfahrensschritt 610 die Zusatzheizeinrichtung 310 aktiviert wird, um eine besonders hohe Einspeisetemperatur des zweiten Wärmeträgermediums 70 in den Wärmespeicher 15 zu gewährleisten.

Das eben beschriebene Verfahren zum Betrieb des in Figur 2 gezeigten Systems kann auch auf das in Figur 1 gezeigte System 10 übertragen werden. Abweichend zu dem oben beschriebenen Verfahren ist das Verfahren zum Betrieb des in Figur 1 gezeigten Systems nur im sechsten und siebten Verfahrensschritt abgewandelt.

Im sechsten Verfahrensschritt 610 steuert das Steuergerät 175 das erste Mehrwegeventil 115 derart an, dass das erste Mehrwegeventil 115 die Bypassleitung 130 und die siebte Leitung 145 zumindest teilweise mit der sechsten Leitung 140 fluidisch verbindet. Dazu ist von Vorteil, wenn das erste Mehrwegeventil 115 als Mischventil ausgebildet ist. Dabei teilt das erste Mehrwegeventil 115 den Strom des zweiten Wärmeträgermediums 70 auf, so dass ein erster Teil des zweiten Wärmeträgermediums vom ersten Mehrwegeventil 300 über die Bypassleitung 130 eingangsseitig zur Förderpumpe 125 gefördert wird. Gleichzeitig strömt ein zweiter Teil des zweiten Wärmeträgermediums über zu dem zweiten Mischventil 120. Das zweite Mischventil 120 wird derart von dem Steuergerät 175 angesteuert, dass das zweite Mischventil 120 die siebte Leitung 145 mit der ersten Einspeiseöffnung verbunden ist.

Im siebten Verfahrensschritt 615 steuert das Steuergerät 175 das zweite Mehrwegeventil 120 derart an, dass das zweite Mehrwegeventil 120 den dritten Ventilanschluss 160 mit dem ersten Ventilanschluss 150 fluidisch verbindet. Gleichzeitig steuert das Steuergerät 175 das erste Mehrwegeventil 115 derart an, dass die sechste Leitung 140 mit der siebten Leitung 145 fluidisch verbunden ist, und die Bypassleitung 130 fluidisch von der sechsten Leitung 140 getrennt ist. Dadurch strömt das zweite Wärmeträgermedium 70 ausschließlich von der sechsten Leitung 140 über die siebten Leitung 145 in das Einspeiserohr 515 und tritt über die zweite Einspeiseöffnung 100 in den Wärmespeicher 15 in Schwerkraftrichtung tiefer liegend als die erste Einspeiseöffnung 95 ein.

Die oben beschriebene Ausgestaltung hat den Vorteil, dass bei einer Erwärmung des Wärmespeichers 15 nach kurzer Aktivierung der Wärmequelle 30 bereits für den Nutzer erwärmtes zweites Wärmeträgermedium 70 zur Nutzung über den Entnahmeanschluss 75 bereitstellt.

Zusätzlich kann gewährleistet werden, dass, wenn das zweite Wärmeträgermedium 70 erwärmt wird und über die zweite Offenstellung des Mehrwegeventils 300 eingespeist wird, eine ausgezeichnete Temperaturstabilität über die Erstreckung in Schwerkraftrichtung des zweiten Wärmeträgermediums 70 gewährleistet werden kann.

Zusätzlich können durch das Mehrwegeventil 300 und/oder der Einspeiseeinrichtung 25 verschiedene Betriebsmodi zur optimalen Anpassung des Systems 10 gewährleistet werden. Insbesondere ist dabei denkbar, dass die Schwellenwerte S1, S2, S3 mittels einer Hysteresefunktion belegt sind, um ein ständiges Ein- und Umschalten des Mehrwegeventils 300 zu vermeiden.

Ferner wird darauf hingewiesen, dass das beschriebene Verfahren selbstverständlich auch in einer anderen Reihenfolge der Verfahrensschritte durchgeführt werden kann. Dabei ist auch denkbar, dass zusätzliche Verfahrensschritte vorgesehen sind oder beschriebene Verfahrensschritte zeitgleich ausgeführt werden. Auch ist denkbar, dass auf wenigstens einen Verfahrensschritt verzichtet wird.

## Patentansprüche

1. Einspeiseeinrichtung (25) für eine Einspeisung eines Wärmeträgermediums in einen Wärmespeicher (15),
- aufweisend einen ersten Anschluss (500), ein Anschlussstück (510) und ein Einspeiserohr (515),
- wobei der erste Anschluss (500) mit einem Mehrwegeventil (115, 120, 300) verbindbar ist,
- wobei das Anschlussstück (510) mit einem Wärmespeicheranschluss (250) des Wärmespeichers (15) verbindbar ist,
**dadurch gekennzeichnet, dass**
- ein zweiter Anschluss (505) und eine Verbindungsleitung (520) vorgesehen sind,
- wobei das Anschlussstück (510) hohlzylindrisch ausgebildet ist und das Einspeiserohr (515) durch das Anschlussstück (510) geführt ist und mit dem zweiten Anschluss (505) fluidisch verbunden ist,
- wobei der erste Anschluss (500) mittels der Verbindungsleitung (520) mit dem Anschlussstück (510) fluidisch verbunden ist.

2. Einspeiseeinrichtung (25) nach Anspruch 1,
- wobei die Verbindungsleitung (520) in dem Anschlussstück (510) an einer ersten Einspeiseöffnung (95) mündet,
- wobei das Einspeiserohr (515) mit einem festen Ende mit dem zweiten Anschluss (505) verbunden ist,
- wobei an einem freien Ende des Einspeiserohrs (515) eine zweite Einspeiseöffnung (100) angeordnet ist,
- wobei die erste Einspeiseöffnung (95) zu der zweiten Einspeiseöffnung (100) in Erstreckungsrichtung des Einspeiserohrs (515) beabstandet angeordnet sind.

3. Einspeiseeinrichtung (25) nach Anspruch 1 oder 2, wobei der erste Anschluss (500) quer zu einer Erstreckungsrichtung des Einspeiserohrs (515) zu dem zweiten Anschluss (505) versetzt angeordnet ist.

4. Einspeiseeinrichtung (25) nach einem der Ansprüche 1 bis 3,
- wobei die Verbindungsleitung (520) einen ersten Abschnitt (530) und einen zweiten Abschnitt (535) aufweist,
- wobei der erste Abschnitt (530) an dem Anschlussstück (510) angeordnet ist,
- wobei der erste Anschluss (500) an dem zweiten Abschnitt (535) angeordnet ist,
- wobei die beiden Abschnitte (530, 535) unterschiedlich zueinander, vorzugsweise senkrecht zueinander, ausgerichtet sind.

5. Einspeiseeinrichtung (25) nach einem der Ansprüche 1 bis 4, wobei das Einspeiserohr (515) und das Anschlussstück (510) koaxial zueinander ausgerichtet sind.

6. Mehrwegeventil (115, 120, 300) zur Steuerung einer Einspeiseeinrichtung (25) nach einem der Ansprüche 1 bis 5,
- aufweisend ein Ventilgehäuse (405) und einen im Ventilgehäuse (405) angeordneten Ventilkörper (400),
- wobei das Ventilgehäuse (405) wenigstens einen ersten Ventilanschluss (150), einen zweiten Ventilanschluss (155) und einen dritten Ventilanschluss (160) aufweist,
- wobei der Ventilkörper (400) zwischen einer Schließposition, einer ersten Offenposition und einer zweiten Offenposition verdrehbar um eine Drehachse (420) gelagert ist und zumindest abschnittsweise eine hohlzylindrische Ausgestaltung aufweist,
- wobei der Ventilkörper (400) eine an einer äußeren Umfangsfläche (430) angeordnete Aussparung (435) und eine an einer Stirnseite angeordnete Öffnung (440) aufweist,
- wobei die Aussparung (435) fluidisch mit der Öffnung (440) verbunden ist,
- wobei die Öffnung (440) in der Schließ- und/oder der ersten Offenposition und/oder der zweiten Offenposition mit dem ersten Ventilanschluss (150) zumindest teilweise überlappt,
- wobei der zweite Ventilanschluss (155) in der ersten Offenposition mit der Aussparung (435) und der dritte Ventilanschluss in der zweiten Offenposition mit der Aussparung (435) zumindest teilweise überlappt.

7. Mehrwegeventil (115, 120, 300) nach Anspruch 6,
- wobei das Ventilgehäuse (405) einen vierten Ventilanschluss (305) aufweist,
- wobei vorzugsweise der vierte Ventilanschluss (305) auf einer zur Drehachse (420) gegenüberliegenden Seite des dritten Ventilanschlusses (160) angeordnet ist,
- wobei die Aussparung (435) mit dem vierten Ventilanschluss (305) in der ersten Offenposition zumindest teilweise überlappt.

8. Mehrwegeventil (115, 120, 300) nach Anspruch 7, wobei der zweite Ventilanschluss (155) und der vierte Ventilanschluss (305) V-förmig zueinander in einer gemeinsamen Drehebene senkrecht zur Drehachse (420) angeordnet sind.

9. Mehrwegeventil (115, 120, 300) nach einem der Ansprüche 6 bis 8,
- wobei wenigstens eine Dichteinrichtung (445) vorgesehen ist,
- wobei die Dichteinrichtung (445) axial angrenzend an die Aussparung (435) angeordnet ist.

10. System (10)
- mit einem Wärmespeicher (15), einem Mehrwegeventil (115, 120, 300) nach einem der Ansprüche 6 bis 9, einem Wärmetauscher (20) und einer Einspeiseeinrichtung (25),
- wobei der Wärmetauscher (20) mit einer Wärmequelle (30) verbindbar und ausgebildet ist, ein Wärmeträgermedium (70) zu erwärmen
- wobei die Einspeiseeinrichtung (25) ausgebildet ist, das Wärmeträgermedium (70) in den Wärmespeicher (15) einzuspeisen,
- wobei die Einspeiseeinrichtung (25) eine erste Einspeiseöffnung (95) und eine zweite Einspeiseöffnung (100) aufweist,
- wobei die erste Einspeiseöffnung (95) in Schwerkraftrichtung höher als die zweite Einspeiseöffnung (100) angeordnet ist,
- wobei der erste Ventilanschluss (150) mit einer sekundärseitigen Ausgangsseite (141) des Wärmetauschers (20) verbunden ist,
- wobei die erste Einspeiseöffnung (95) mit dem zweiten Ventilanschluss (155) und die zweite Einspeiseöffnung (100) mit dem dritten Ventilanschluss (160) des Mehrwegeventils (115, 120, 300) fluidisch verbunden ist.

11. System (10)
- mit einem Wärmespeicher (15), einem Mehrwegeventil (115, 120, 300) nach einem der Ansprüche 6 bis 10, einem Wärmetauscher (20) und einer Einspeiseeinrichtung (25) nach einem der Ansprüche 1 bis 5,
- wobei der Wärmetauscher (20) mit einer Wärmequelle (30) verbindbar und ausgebildet ist, ein Wärmeträgermedium (70) zu erwärmen,
- wobei die Einspeiseeinrichtung (25) zumindest teilweise in dem Wärmespeicher (15) angeordnet und ausgebildet ist, das Wärmeträgermedium (70) in den Wärmespeicher (15) einzuspeisen,
- wobei das Anschlussstück (510) der Einspeiseeinrichtung (25) an einem Wärmespeicheranschluss (250) des Wärmespeichers (15) angeschlossen ist,
- wobei das Einspeiserohr (515) in einen Innenraum (96) des Wärmespeichers (15) ragt,
- wobei der erste Anschluss (500) der Einspeiseeinrichtung (25) mit dem zweiten Ventilanschluss (155) und der zweite Anschluss (505) mit dem dritten Ventilanschluss (160) fluidisch verbunden sind.

12. System (10) nach Anspruch 10 oder 11,
- wobei der Wärmespeicher (15) eine Entnahmeeinrichtung (105) aufweist,
- wobei die Entnahmeeinrichtung (105) eine Entnahmeöffnung (110) aufweist,
- wobei die Entnahmeöffnung (110) in Schwerkraftrichtung zumindest teilweise tiefer angeordnet ist als die erste und/oder zweite Einspeiseöffnung (95, 100).

13. System (10) nach Anspruch 12,
- wobei eine Bypassleitung (130) und eine Förderpumpe (125) vorgesehen ist,
- wobei die Förderpumpe (125) mit der Entnahmeeinrichtung (105) fluidisch gekoppelt ist,
- wobei die Bypassleitung (130) stromaufwärtsseitig der Förderpumpe (125) mit der Entnahmeeinrichtung (105) und mit dem vierten Ventilanschluss (305) fluidisch verbunden ist.

14. Verfahren zum Betrieb eines Systems (10) nach einem der Ansprüche 10 bis 13,
- wobei eine Temperatur (T1) des Wärmeträgermediums (70) erfasst wird,
- wobei die Temperatur (T1) mit einem vordefinierten Schwellenwert (S1) in einem Vergleich verglichen wird,
- wobei in Abhängigkeit eines Ergebnisses des Vergleichs das Mehrwegeventil (115, 120, 300) gesteuert wird.
